# EUROPEAN PATENT APPLICATION

(11) **EP 4 694 195 A1**
(43) Date of publication of application: **11.02.2026**
(21) Application number: 24845747.5
(22) Date of filing: 16.05.2024
(51) Int. Cl.: H04R 1/28, H04R 1/02, H04M 1/02, H04M 1/03

(54) **ELECTRONIC DEVICE COMPRISING ACOUSTIC CONDUIT**

(30) Priority: 21.07.2023 KR 20230095114; 01.08.2023 KR 20230100204
(71) Applicant: Samsung Electronics Co., Ltd., Suwon-si, Gyeonggi-do 16677 (KR)
(72) Inventor: JUNG, Sanghoon, Suwon-si Gyeonggi-do 16677 (KR); LEE, Kyoungsun, Suwon-si Gyeonggi-do 16677 (KR); CHANG, Yuchul, Suwon-si Gyeonggi-do 16677 (KR)
(74) Representative: Appleyard Lees IP LLP
(86) International application number: PCT/KR2024/006622
(87) International publication number: WO 2025/023443

(57) **Abstract**

The electronic device may comprise: a housing including a front surface, a rear surface opposite to the front surface, an inner space between the front surface and the rear surface, and a front frame surrounding at least a portion of the inner space; a display disposed on the front surface of the housing; and an acoustic module disposed in the inner space and including a speaker that generates sound. The front frame may include: a first frame portion that is disposed in the inner space and supports the acoustic module; and a second frame portion surrounding the periphery of the first frame portion and forming at least a portion of the side surface of the housing. An acoustic hole with a width direction that opens to the outside of the housing may be formed between the first frame portion and the second frame portion. An acoustic conduit for moving sound from an inlet in communication with the acoustic module toward an outlet in communication with the acoustic hole may be formed in the first frame portion. The acoustic conduit may have a cross-sectional width gradually increasing from the inlet toward the outlet in a state where the display is viewed.

## Description

### TECHNICAL FIELD

The following disclosure relates to an electronic device including an acoustic conduit.

### BACKGROUND Art

An electronic device, including but not limited to a smartphone, a wearable device, and a tablet personal computer (PC), may include an acoustic module for receiving a sound originating from outside the electronic device. The acoustic module may be mounted to the housing of the electronic device and may emit or receive a sound through an acoustic hole formed in the housing. The sound may travel along an acoustic conduit and be emitted to the outside of the housing through the acoustic hole. When the acoustic conduit is disposed adjacent to the acoustic hole formed at the center of the housing, the acoustic performance of the electronic device may be improved.

### DISCLOSURE OF THE INVENTION

### TECHNICAL SOLUTIONS

In an embodiment, an electronic device includes a housing including a front surface, a rear surface that is opposite to the front surface, an inner space between the front surface and the rear surface, and a front frame surrounding at least a portion of the inner space, a display disposed on the front surface of the housing, and an acoustic module disposed in the inner space and including a speaker configured to generate a sound. The front frame may include a first frame portion disposed in the inner space and configured to support the acoustic module and a second frame portion surrounding a perimeter of the first frame portion and forming at least a portion of a side surface of the housing. An acoustic hole, which has a width direction and is open to an outside of the housing, may be formed between the first frame portion and the second frame portion. An acoustic conduit configured to move the sound from an inlet in communication with the acoustic module toward an outlet in communication with the acoustic hole may be formed in the first frame portion. The acoustic conduit may have a cross-sectional width gradually increasing from the inlet toward the outlet in a state in which the display is viewed.

In an embodiment, a method of manufacturing a housing of an electronic device includes a first injection operation of inserting a first material for first molding while a first movable mold is coupled to a first fixed mold to inject a first frame portion in which an acoustic conduit is formed, a first processing operation of separating the first movable mold from the first fixed mold and processing the first frame portion, a second injection operation of inserting a second material for second molding while the first frame portion is inserted into a second fixed mold to inject a second frame portion connected to the outer perimeter of the first frame portion to form a housing in which an acoustic hole is formed, and a second processing operation of separating the housing from the second fixed mold and end milling the first frame portion to form an inlet of the acoustic conduit.

In an embodiment, an electronic device includes a housing including a front surface, a rear surface that is opposite to the front surface, an inner space between the front surface and the rear surface, and a front frame surrounding at least a portion of the inner space, a display disposed on the front surface of the housing, a camera module disposed to be exposed through the front surface or the rear surface, and an acoustic module disposed in the inner space and including a speaker configured to generate a sound. The front frame may include a first frame portion disposed in the inner space and configured to support the acoustic module and a second frame portion surrounding the perimeter of the first frame portion, configured to form at least a portion of a side surface of the housing, and formed of a different material from the first frame portion. An acoustic hole, which has a width direction and is open to an outside of the housing, may be formed between the first frame portion and the second frame portion. The first frame portion may include an acoustic conduit extending from an inlet in communication with the acoustic module toward an outlet in communication with the acoustic hole, wherein a size of a cross-section of the acoustic conduit gradually increases from the inlet toward the outlet and a camera mounting hole formed through a position adjacent to the acoustic conduit and for disposing a camera module. A width of the cross-section of the acoustic conduit may gradually increase from the inlet toward the outlet in a state in which the display is viewed.

### BRIEF DESCRIPTION OF DRAWINGS

The above and other aspects, features, and advantages of certain embodiments of the present disclosure will be more apparent from the following detailed description, taken in conjunction with the accompanying drawings.
FIG. 1 is a block diagram illustrating an electronic device in a network environment according to an embodiment.
FIG. 2 is a block diagram illustrating an audio module of an electronic device according to an embodiment.
FIG. 3A is a front perspective view of an electronic device according to an embodiment.
FIG. 3B is a rear perspective view of the electronic device according to an embodiment.
FIG. 4 is an exploded perspective view of the electronic device according to an embodiment.
FIG. 5A is a cross-sectional view illustrating an acoustic conduit through which a sound of an electronic device travels, according to an embodiment.
FIG. 5B is an enlarged view of a partial area of FIG. 5A.
FIG. 5C is a cross-sectional view taken along A-A' of FIG. 5B.
FIG. 5D is a cross-sectional view illustrating the acoustic conduit according to an embodiment.
FIG. 5E is a cross-sectional view illustrating a bridge portion formed in a first frame portion, according to an embodiment.
FIG. 5F is a cross-sectional view illustrating a state in which the bridge portion according to FIG. 5E is connected by a connecting portion of a second frame portion.
FIG. 5G is a cross-sectional view illustrating a fingerprint sensing area formed in the first frame portion, according to an embodiment.
FIG. 6 is a flowchart of a method of manufacturing a housing of an electronic device, according to an embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like components and a repeated description related thereto will be omitted.

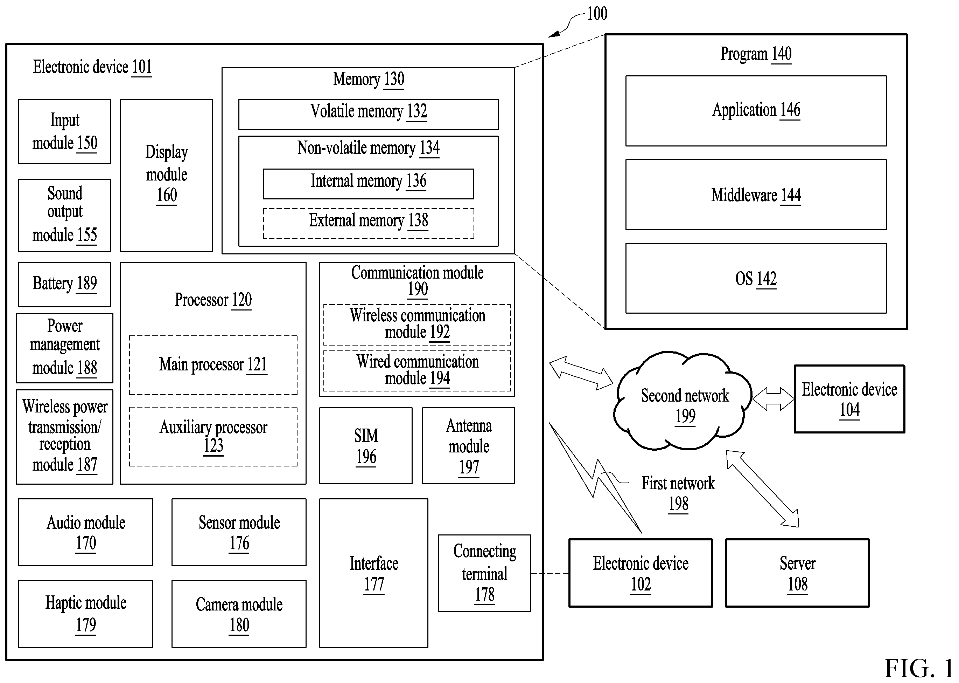

FIG. 1 is a block diagram illustrating an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain a sound via the input module 150, or output the sound via an external electronic device (e.g., the electronic device 102) (e.g., a speaker or headphones) directly (e.g., wiredly) or wirelessly coupled with the sound output module 155 or the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more of instructions that are stored in a storage medium (e.g., internal memory 136 or external memory 138) that is readable by a machine (e.g., a foldable electronic device 101). For example, a processor (e.g., the processor 120) of the machine (e.g., the foldable electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more of other operations may be added.

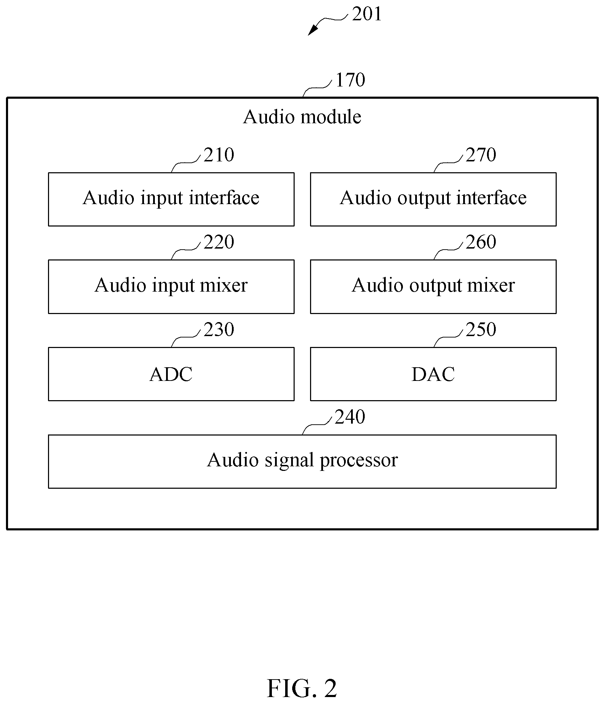

FIG. 2 is a block diagram illustrating an audio module of an electronic device according to an embodiment.

Referring to FIG. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., Bluetooth^{™} communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130 of FIG. 1) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor 120 or the memory 130) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

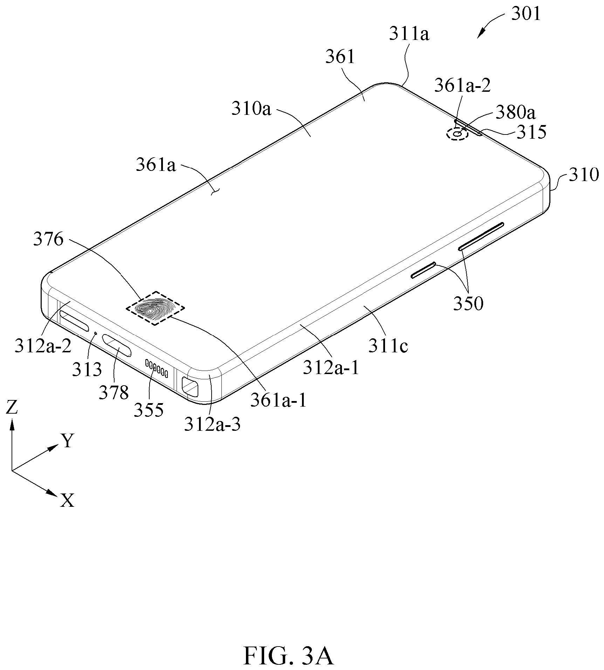

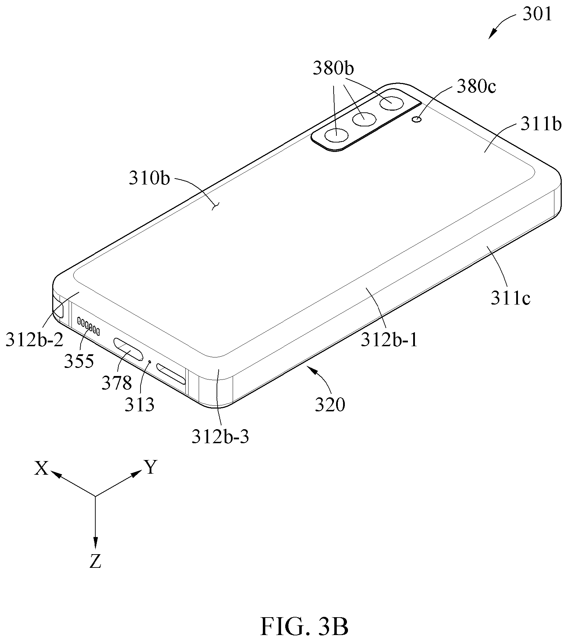

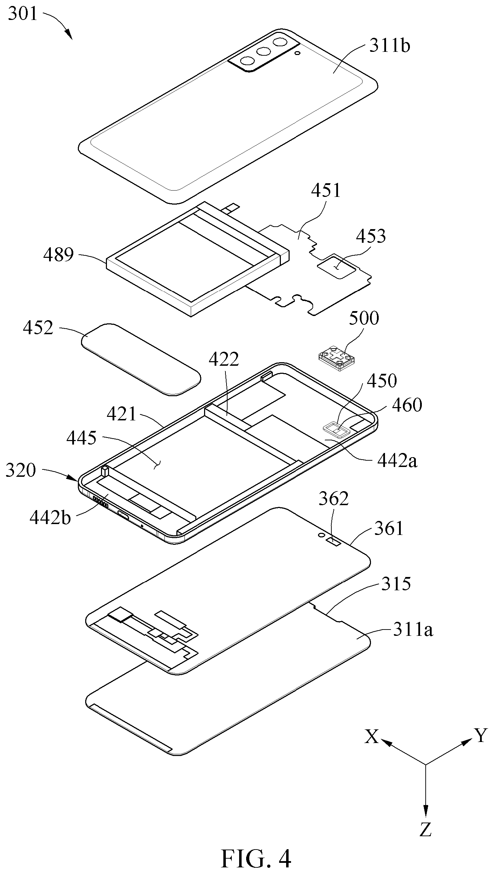

FIG. 3A is a front perspective view of an electronic device according to an embodiment, FIG. 3B is a rear perspective view of the electronic device according to an embodiment, and FIG. 4 is an exploded perspective view of the electronic device according to an embodiment.

Referring to FIGS. 3A, 3B, and 4, an electronic device 301 (e.g., the electronic device 101 of FIG. 1) according to an embodiment may include a housing 310 having a front surface 310a (e.g., a first surface), a rear surface 310b (e.g., a second surface), and a side surface 311c (e.g., a third surface) surrounding an inner space between the front surface 310a and the rear surface 310b.

In an embodiment, the front surface 310a may be formed by a first plate 311a of which at least a portion is substantially transparent. For example, the first plate 311a may include a polymer plate or a glass plate including at least one coating layer. In an embodiment, the rear surface 310b may be formed by a second plate 311b that is substantially opaque. For example, the second plate 311b may be formed of coated or tinted glass, ceramic, polymer, metal (e.g., aluminum, stainless steel, or magnesium), or a combination thereof. The side surface 311c may be formed by a front frame 320 that is coupled to the first plate 311a and the second plate 311b and includes a metal and/or a polymer. In an embodiment, the second plate 311b and the front frame 320 may be integrally and seamlessly formed. In an embodiment, the second plate 311b and the front frame 320 may be formed of substantially the same material (e.g., aluminum).

In an embodiment, the first plate 311a may include a plurality of first edge areas 312a-1 that are rounded in a direction from at least a partial area of the front surface 310a toward the second plate 311b and extend in one direction (e.g., a +/-X-axis direction), a plurality of second edge areas 312a-2 that are rounded in the direction from at least a partial area of the front surface 310a toward the second plate 311b and extend in the other direction (e.g., a +/-Y-axis direction), and a plurality of third edge areas 312a-3 that are rounded in the direction from at least a partial area of the front surface 310a toward the second plate 311b and positioned between the plurality of first edge areas 312a-1 and the plurality of second edge areas 312a-2.

In an embodiment, the second plate 311b may include a plurality of fourth edge areas 312b-1 that are rounded in a direction from at least a partial area of the rear surface 310b toward the first plate 311a and extend in one direction (e.g., the +/-X-axis direction), a plurality of fifth edge areas 312b-2 that are rounded in the direction from at least a partial area of the rear surface 310b toward the first plate 311a and extend in the other direction (e.g., the +/-Y-axis direction), and a plurality of sixth edge areas 312b-3 that are rounded in the direction from at least a partial area of the rear surface 310b toward the first plate 311a and positioned between the plurality of fourth edge areas 312b-1 and the plurality of fifth edge areas 312b-2.

In an embodiment, the front frame 320 may surround at least a portion of the inner space between the front surface 310a and the rear surface 310b. The front frame 320 may include a first frame portion 421 that forms an arrangement space of components of the electronic device 301 and a second frame portion 422 that is connected to the first frame portion 421 and is disposed on at least a portion of the side surface 311c.

In an embodiment, the first frame portion 421 may be disposed inside (or in a body portion) of the electronic device 301. The first frame portion 421 may be formed integrally with the second frame portion 422 or may be formed separately and connected to the second frame portion 422. In an embodiment, PCBs 451 and 452 may be disposed in the first frame portion 421. The first frame portion 421 may be connected to the ground of, for example, the PCBs 451 and 452.

In an embodiment, a display 361 may be positioned on one surface (e.g., a lower surface (+Z-axis direction surface) of FIG. 4) of the first frame portion 421, and the second plate 311b may be disposed on the other surface (e.g., an upper surface (-Z-axis direction surface) of FIG. 4) of the first frame portion 421.

In an embodiment, the second frame portion 422 may connect the edges of the first plate 311a and the second plate 311b and surround the space between the first plate 311a and the second plate 311b to form the side surface 311c of the housing 310.

In an embodiment, the front frame 320 may be formed at least in part of a conductive material. For example, the second frame portion 422 may be formed of a metal and/or conductive polymer material. In an embodiment, the first frame portion 421 may be formed of a metal and/or conductive polymer material, similar to the second frame portion 422.

In an embodiment, the front frame 320 may include a support area 450 for accommodating or supporting an acoustic module 500. Alternatively, the support area 450 may accommodate the acoustic module 500 and support the first circuit board 451. An acoustic conduit 460 through which a sound output from the acoustic module 500 is emitted may be formed in the support area 450.

In an embodiment, the electronic device 301 may include the display 361 (e.g., the display module 160 of FIG. 1). In an embodiment, the display 361 may be positioned on the front surface 310a. In an embodiment, the display 361 may be exposed through at least a portion (e.g., the plurality of first edge areas 312a-1, the plurality of second edge areas 312a-2, and the plurality of third edge areas 312a-3) of the first plate 311a.

In an embodiment, an edge of the display 361 may substantially coincide with an outer edge of the first plate 311a. In an embodiment, the display 361 may include a touch sensing circuit, a pressure sensor for sensing an intensity (pressure) of a touch, and/or a digitizer for detecting a magnetic-type stylus pen.

In an embodiment, the display 361 may include a screen display area 361a that is visually exposed and displays content through a pixel or a plurality of cells. In an embodiment, the screen display area 361a may include a sensing area 361a-1 and/or a camera area 361a-2. In this case, the sensing area 361a-1 may overlap at least a portion of the screen display area 361a. The sensing area 361a-1 may allow transmission of an input signal related to a sensor module 376 (e.g., the sensor module 176 of FIG. 1). The sensing area 361a-1 may display content, like the screen display area 361a that does not overlap the sensing area 361a-1. For example, the sensing area 361a-1 may display content while the sensor module 376 is not operating. The camera area 361a-2 may overlap at least a portion of the screen display area 361a. The camera area 361a-2 may allow transmission of an optical signal related to first camera modules 380a and 380b (e.g., the camera module 180 of FIG. 1). The camera area 361a-2 may display content, like the screen display area 361a that does not overlap the camera area 361a-2. For example, the camera area 361a-2 may display content while the first camera modules 380a and 380b are not operating.

In an embodiment, the electronic device 301 may include an audio module 370 (e.g., the audio module 170 of FIG. 1). The audio module 370 may obtain a sound from the outside of the electronic device 301. For example, the audio module 370 may be positioned on the side surface 311c of the housing 310. In one embodiment, the audio module 370 may obtain a sound through at least one hole.

In an embodiment, the electronic device 301 may include the sensor module 376. The sensor module 376 may sense a signal applied to the electronic device 301. The sensor module 376 may be positioned, for example, on the front surface 310a of the electronic device 301. The sensor module 376 may form the sensing area 361a-1 in at least a portion of the screen display area 361a. The sensor module 376 may receive an input signal transmitted through the sensing area 361a-1 and generate an electrical signal based on the received input signal. For example, the input signal may have a designated physical quantity (e.g., heat, light, temperature, sound, pressure, or ultrasound). In another example, the input signal may include a signal related to biometric information (e.g., a fingerprint, a voice, and the like) of a user.

In an embodiment, the electronic device 301 may include the camera modules 380a and 380b (e.g., the camera module 180 of FIG. 1). In an embodiment, the camera modules 380a and 380b may include a first camera module 380a, a second camera module 380b, and a flash 380c. In an embodiment, the first camera module 380a may be disposed to be exposed through the front surface 310a of the housing 310, and the second camera module 380b and the flash 380c may be disposed to be exposed through the rear surface 310b of the housing 310. In an embodiment, at least a portion of the first camera module 380a may be disposed in the housing 310 to be covered through the display 361. In an embodiment, the first camera module 380a may receive an optical signal transmitted through the camera area 361a-2. In an embodiment, the second camera module 380b may include a plurality of cameras (e.g., dual cameras, triple cameras, or quad cameras). In an embodiment, the flash 380c may include a light-emitting diode or a xenon lamp.

In an embodiment, the electronic device 301 may include external acoustic holes 313, 315, and 355. The external acoustic holes 313, 315, and 355 may output a sound to the outside of the electronic device 301, and the electronic device 301 may include the plurality of external acoustic holes 313, 315, and 355.

For example, the first external acoustic hole 315 may be formed adjacent to the side surface 311c in one direction (e.g., the +Y direction) of the housing 310 and, particularly, to the front camera module 380a or the camera area 361a-2 of the display 361. The second external acoustic hole 355 may be at least one or more holes formed on the side surface 311c in one direction (e.g., the -Y direction) of the housing 310. The electronic device 301 may output a stereophonic sound to the outside of the electronic device 301 through the first external acoustic hole 315 and the second external acoustic hole 355.

In an embodiment, an engraved area of the first external acoustic hole 315 may be provided on the outer edge of the first plate 311a, wherein the first plate 311a may be coupled to the display 361, and the engraved area may be implemented as the first external acoustic hole 315. The display 361 may be provided with an acoustic hole 362 for a sound to pass therethrough, thereby guiding a sound in a direction from the acoustic module 500 to the first external acoustic hole 315.

According to an embodiment, the electronic device 301 may not include the first external acoustic hole 315 and may directly output a sound to the outside via the acoustic hole 362. The display 361 according to an embodiment may include a notch structure in which the acoustic hole 362 and the camera module 380a are positioned.

In an embodiment, the electronic device 301 may include an input module 350 (e.g., the input module 150 of FIG. 1). The input module 350 may receive a manipulation signal of a user. The input module 350 may include, for example, at least one key input device disposed to be exposed on the side surface 311c of the housing 310.

In an embodiment, the electronic device 301 may include a connecting terminal 378 (e.g., the connecting terminal 178 of FIG. 1). In an embodiment, the connecting terminal 378 may be disposed on the side surface 311c. For example, when the electronic device 301 is viewed in one direction (e.g., the +Y-axis direction of FIG. 3A), the connecting terminal may be disposed on a central portion of the side surface 311c and the sound output module 355 may be disposed in a direction (e.g., a right direction) based on the connecting terminal 378.

In an embodiment, the electronic device 301 may include the PCBs 451 and 452, and a battery 489 (e.g., the battery 189 of FIG. 1). In an embodiment, the PCBs 451 and 452 may include the first circuit board 451 and the second circuit board 452. In this case, the first circuit board 451 may be accommodated in a first board slot 442a of the first frame portion 421, and the second circuit board 452 may be accommodated in a second board slot 442b of the first frame portion 421. In an embodiment, the battery 489 may be accommodated in a battery slot 445 of the first frame portion 421 formed between the first board slot 442a and the second board slot 442b.

In an embodiment, in the PCBs 451 and 452, for example, in the first circuit board 451, a seating portion 453 that is open from the front surface (e.g., the +Z direction) to the rear surface (e.g., the -Z direction) that is opposite to the front surface may be formed. The seating portion 453 may be the same as or greater than a cross-sectional area in a plane direction (e.g., the X-Y plane) of the acoustic module 500 and may have a shape corresponding to a shape of a cross-section in the plane direction (e.g., the X-Y plane) of the acoustic module 500. The acoustic module 500 may be accommodated in the seating portion 453, and the acoustic module 500 and the first circuit board 451 may be disposed on a plane (e.g., the X-Y plane) at substantially the same height.

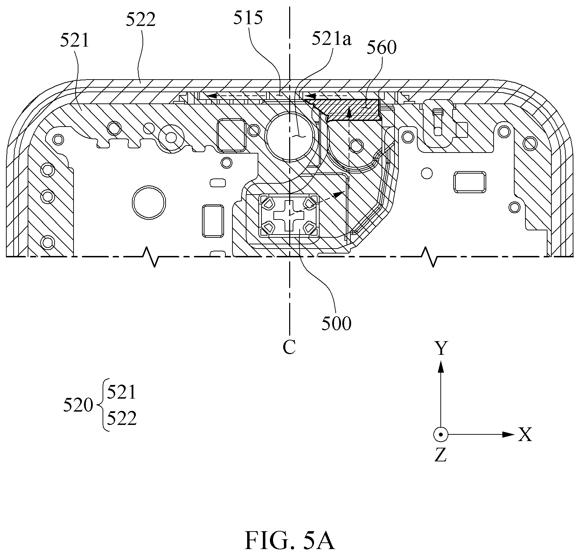

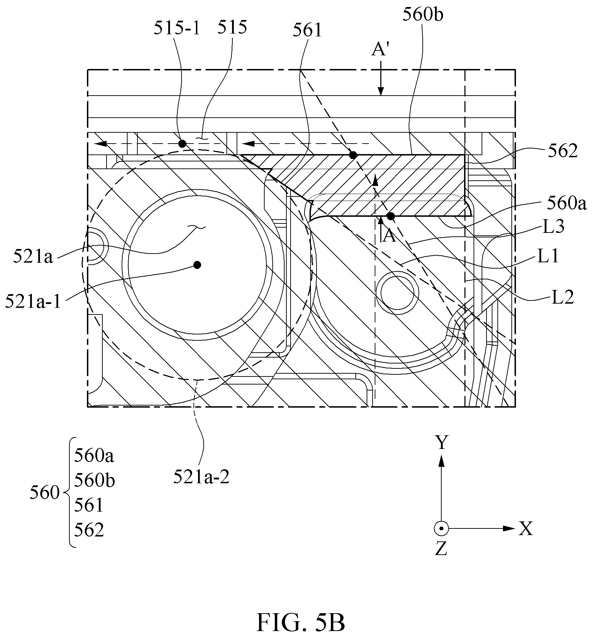

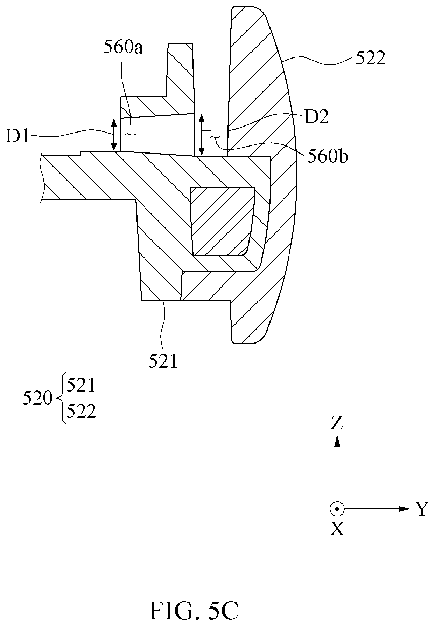

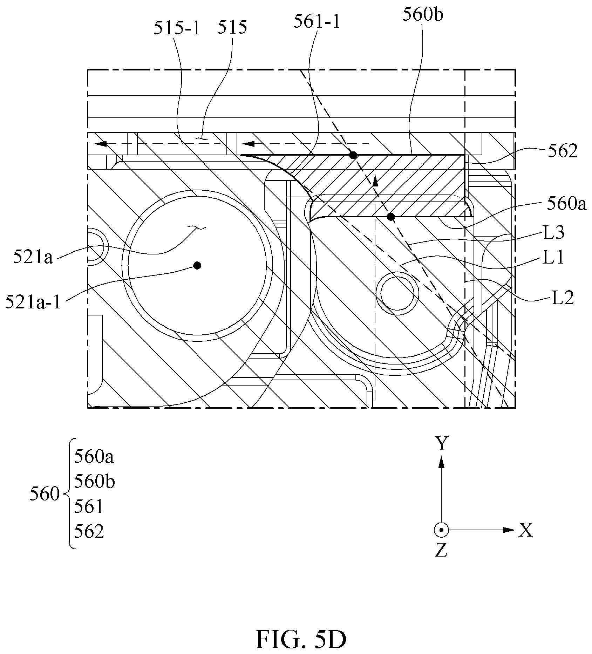

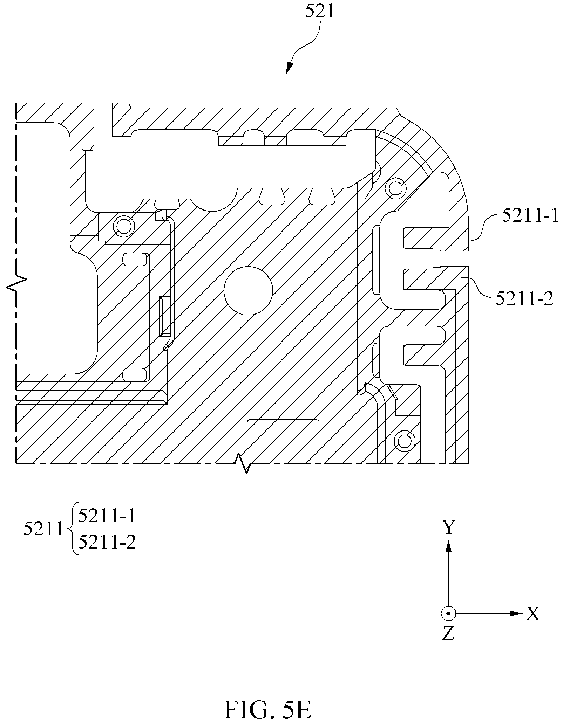

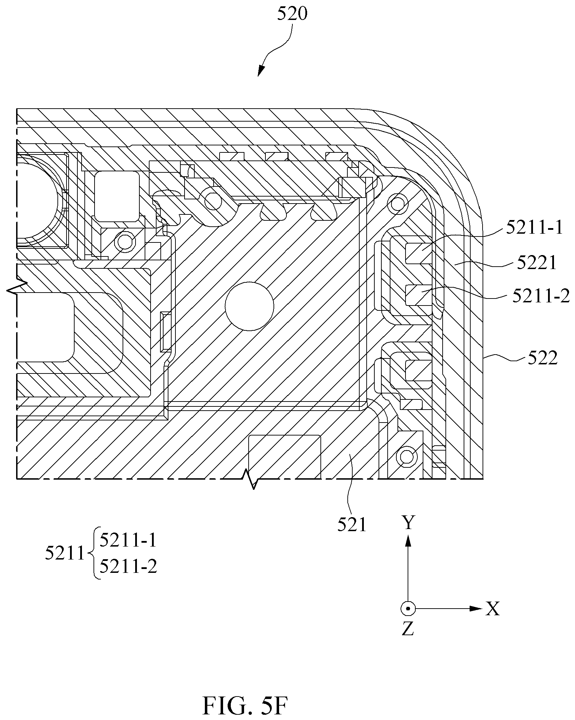

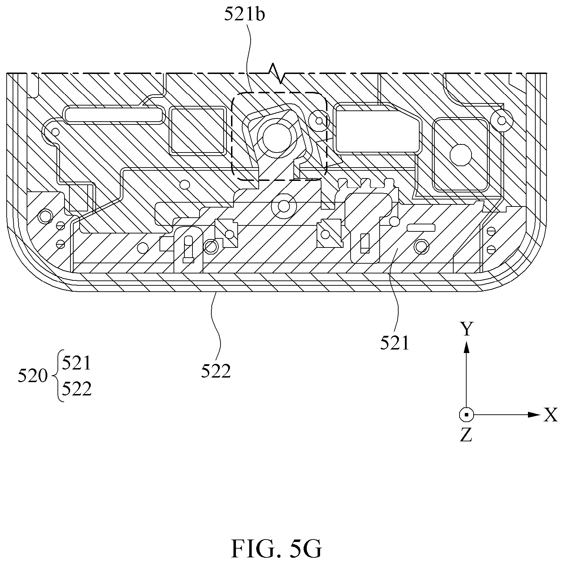

In an embodiment, a processor (e.g., the processor 120 of FIG. 1) may be disposed on the PCBs 451 and 452. The processor may include, for example, one or more of a CPU, an AP, an ISP, a sensor hub processor, or a CP. In an embodiment, a wireless communication circuit (e.g., the wireless communication module 192 of FIG. 1) may be disposed on the PCBs 451 and 452. The wireless communication circuit may perform communication with, for example, an external device (e.g., the electronic device 104 of FIG. 1). The electronic device 301 may include an antenna structure (e.g., the antenna module 197 of FIG. 1 and an antenna structure 50 of FIG. 5), and the wireless communication circuit may be electrically connected to the antenna structure. In an embodiment, the wireless communication circuit may generate a signal to be transmitted through the antenna structure or may detect a signal received through the antenna structure. In an embodiment, the PCBs 451 and 452 may include the ground and the ground of the PCBs 451 and 452 may function as the ground of the antenna structure implemented using the wireless communication circuit.

FIG. 5A is a cross-sectional view illustrating an acoustic conduit through which a sound of an electronic device travels, according to an embodiment. FIG. 5B is an enlarged view of a partial area of FIG. 5A. FIG. 5C is a cross-sectional view taken along A-A' of FIG. 5B. FIG. 5D is a cross-sectional view illustrating the acoustic conduit according to an embodiment. FIG. 5E is a cross-sectional view illustrating a bridge portion formed in a first frame portion, according to an embodiment. FIG. 5F is a cross-sectional view illustrating a state in which the bridge portion according to FIG. 5E is connected by a connecting portion of a second frame portion. FIG. 5G is a cross-sectional view illustrating a fingerprint sensing area formed in the first frame portion, according to an embodiment.

Referring to FIGS. 5A to 5G, an electronic device (e.g., the electronic device 301 of FIG. 3A) according to an embodiment may include a housing (e.g., the housing 310 of FIG. 3A) including a front frame 520 (e.g., the front frame 320 of FIG. 3B), a display (e.g., the display 361 of FIG. 3A) disposed on a front surface (e.g., the front surface 310a of FIG. 3A) of the housing, and the acoustic module 500 (e.g., the acoustic module 500 of FIG. 4) including a speaker that generates a sound.

In an embodiment, the housing may form the exterior of the electronic device. In an embodiment, the housing may form an inner space. In an embodiment, an acoustic hole 515 may be formed on an outer surface of the housing. For example, the acoustic hole 515 may be formed on the front surface (e.g., the front surface 310a of FIG. 3A) of the housing. In an embodiment, a front frame 520 may be disposed in the inner space of the housing in which an acoustic conduit 560 (e.g., the acoustic conduit 460 of FIG. 4) is formed.

In an embodiment, the front frame 520 may be disposed in the inner space of the housing. For example, the front frame 520 may surround at least a portion of the inner space between the front surface and the rear surface (e.g., the rear surface 310b of FIG. 3B) of the housing. For example, the front frame 520 may be provided so as to be close to the front portion of the housing in which the acoustic hole 515 is formed. In an embodiment, the front frame 520 may be formed separately from the housing or may also be formed integrally with the housing. For example, the front frame 520 may form at least a portion of a side surface of the housing.

In an embodiment, the front frame 520 may be formed integrally or separately. In an embodiment, the front frame 520 may be formed by a multi-component injection molding scheme. Hereinafter, descriptions are provided based on the assumption that the front frame 520 is formed by the multi-component injection molding scheme. However, the front frame 520 is not limited to being formed only by the multi-component injection molding scheme and may be formed by various other schemes.

In an embodiment, the front frame 520 may include a first frame portion 521 and a second frame portion 522. In an embodiment, the first frame portion 521 and the second frame portion 522 may be connected to each other. For example, the first frame portion 521 and the second frame portion 522 may be connected to each other by injection molding. In an embodiment, the first frame portion 521 may form at least a portion of the interior of the front frame 520. For example, the first frame portion 521 may be disposed in the inner space of the housing. In an embodiment, the second frame portion 522 may form at least a portion of the exterior of the front frame 520.

In an embodiment, the first frame portion 521 may implement an internal structure in which various components that implement the functions of the electronic device are disposed. For example, the acoustic module 500 may be disposed in the first frame portion 521, and the first frame portion 521 may support the acoustic module 500. In an embodiment, the acoustic conduit 560 through which a sound generated by the acoustic module 500 travels may be formed in the first frame portion 521. In an embodiment, a camera mounting hole 521a may be formed in the first frame portion 521. In an embodiment, a camera module (e.g., the camera module 180 of FIG. 1) may be disposed in the camera mounting hole 521a. In an embodiment, the camera mounting hole 521a may be formed through a position adjacent to the acoustic conduit 560. In an embodiment, the camera mounting hole 521a may be spaced apart by a set distance (e.g., 2 millimeters (mm)) or more from the acoustic conduit 560 to prevent or reduce degradation of the acoustic performance of the electronic device and the performance of the camera module.

In an embodiment, the second frame portion 522 may implement an exterior corresponding to the design of the electronic device. For example, the second frame portion 522 may surround the perimeter of the first frame portion 521 and form at least a portion of a side surface of the housing.

In an embodiment, the first frame portion 521 and the second frame portion 522 may be connected to each other by injection molding, and the acoustic hole 515 may be formed between the first frame portion 521 and the second frame portion 522. In an embodiment, the acoustic hole 515 may be formed to be open to the outside of the housing. In an embodiment, a sound generated by the acoustic module 500 may be emitted to the outside of the housing through the acoustic hole 515. In an embodiment, the first frame portion 521 and the second frame portion 522 may be formed of different materials. For example, the first frame portion 521 may be formed of a polycarbonate glass fiber (PC GF)20% material, and the second frame portion 522 may be formed of a PC GF10% material.

In an embodiment, an outlet 560b of the acoustic conduit 560 that is in communication with the length of the acoustic conduit 560 and the acoustic hole 515 may be formed as the first frame portion 521 is connected to the second frame portion 522. An inlet 560a of the acoustic conduit 560 may be formed as the interior of the first frame portion 521 is processed (e.g., end milled) and in communication with the acoustic module 500. In an embodiment, the acoustic conduit 560 may be formed by penetrating the interior of the first frame portion 521 and may function as an acoustic path through which a sound may travel. In an embodiment, based on a path formed by the acoustic conduit 560, one end of the acoustic conduit 560 may communicate with the acoustic hole 515 formed in the housing.

In an embodiment, the inlet 560a of the acoustic conduit 560 may communicate with the acoustic module 500, and the outlet 560b of the acoustic conduit 560 may communicate with the acoustic hole 515. In an embodiment, a sound may travel from the acoustic module 500 through the inlet 560a of the acoustic conduit 560, pass through the outlet 560b of the acoustic conduit 560, reach the acoustic hole 515, and exit to the outside of the housing through the acoustic hole 515.

Hereinafter, the cross-sectional shape of the acoustic conduit 560 is described based on a state in which the display (e.g., the display 361 of FIG. 3A) is viewed (e.g., a state facing a -Z-axis direction).

In an embodiment, the acoustic conduit 560 may be spaced apart by a minimum distance from the camera mounting hole 521a disposed adjacent to the central axis C of the housing. In an embodiment, as the distance between the acoustic conduit 560 and the acoustic hole 515 disposed adjacent to the central axis C of the housing decreases, the difference in sound performance according to the left and right gripping of the electronic device may be eliminated. In an embodiment, the size of the cross-section of the acoustic conduit 560 may gradually increase from the inlet 560a of the acoustic conduit 560 toward the outlet 560b. For example, based on the state in which the display (e.g., the display 361 of FIG. 3A) of the electronic device is viewed, the width (e.g., a length in an X-axis direction) of the cross-section of the acoustic conduit 560 may gradually increase from the inlet 560a toward the outlet 560b of the acoustic conduit 560. For example, based on the length in the height direction (e.g., Z-axis direction) of the housing perpendicular to the front surface (e.g., the front surface 310a of FIG. 3A) of the housing, a length D2 in the height direction at the outlet 560b of the acoustic conduit 560 may be greater than or equal to a length D1 in the height direction at the inlet 560a of the acoustic conduit 560.

In an embodiment, the acoustic conduit 560 may be formed so that a sound travel path from the inlet 560a of the acoustic conduit 560 to the outlet 560b of the acoustic conduit 560 is directed toward the center of the acoustic hole 515. For example, a virtual straight line L3 extending from the center of the inlet 560a of the acoustic conduit 560 to the center of the outlet 560b of the acoustic conduit 560 may be formed to be inclined toward a center 515-1 of the acoustic hole 515.

In an embodiment, the acoustic conduit 560 may have a cross-sectional width (e.g., the length in the X-axis direction) that increases from the inlet 560a in communication with the acoustic module 500 toward the outlet 560b in communication with the acoustic hole 515. In an embodiment, based on the state in which the display (e.g., the display 361 of FIG. 3A) is viewed, the acoustic conduit 560 may include a first side wall 561 and a second side wall 562. In an embodiment, the first side wall 561 and the second side wall 562 may be formed to be perpendicular (e.g., in the Z-axis direction of FIG. 5A) to the front surface (e.g., the front surface 310a of FIG. 3A) of the housing. In an embodiment, the first side wall 561 may be a side wall of the acoustic conduit 560 adjacent to the acoustic hole 515, and the second side wall 562 may be a side wall of the acoustic conduit 560 that is opposite to the first side wall 561. In an embodiment, each of the first side wall 561 and the second side wall 562 may be formed to extend from the inlet 560a toward the outlet 560b of the acoustic conduit 560. For example, the first side wall 561 and the second side wall 562 may be formed to extend away from each other from the inlet 560a toward the outlet 560b of the acoustic conduit 560.

In an embodiment, based on the state in which the display (e.g., the display 361 of FIG. 3A) of the electronic device is viewed, the first side wall 561 may form a straight line. In an embodiment, a straight line L1 formed by the first side wall 561 may be formed to be away from a straight line L2 formed by the second side wall 562 and may be formed to be adjacent to the acoustic hole 515. For example, the first side wall 561 may form the straight line L1 that is inclined toward the center 515-1 of the acoustic hole 515. In an embodiment, the straight line L1 formed by the first side wall 561 may be formed to be inclined with respect to the straight line L2 formed by the second side wall 562. In an embodiment, the first side wall 561 may be formed adjacent to the camera mounting hole 521a for disposing a camera module. In an embodiment, the first side wall 561 may be formed to be spaced apart by a set distance (e.g., 2 mm) or more from the camera mounting hole 521a. For example, the first side wall 561 may be formed to be in contact with a virtual circle 521a-2= that is concentric with the camera mounting hole 521a.

In an embodiment, based on the state in which the display (e.g., the display 361 of FIG. 3A) of the electronic device is viewed, the first side wall 561 may form a curve. For example, based on a center 521a-1 of the camera mounting hole 521a, the first side wall 561 may form a curve having a predetermined curvature.

In an embodiment, based on the state in which the display (e.g., the display 361 of FIG. 3A) of the electronic device is viewed, the second side wall 562 may form a straight line. In an embodiment, the second side wall 562 may form a straight line that is substantially perpendicular (e.g., in the Y-axis direction of FIG. 5A) to the width direction (e.g., in the X-axis direction of FIG. 5A) of the acoustic hole 515. In an embodiment, in order to reduce the eccentricity of the acoustic conduit 560 from the acoustic hole 515, the second side wall 562 formed at a position farther from the acoustic hole 515 than the first side wall 561 may form a straight line based on the state in which the display is viewed.

In an embodiment, the first frame portion 521 may include a plurality of bridge portions 5211. In an embodiment, each of the plurality of bridge portions 5211-1 and 5211-2 may be formed to be separated along the perimeter direction of the first frame portion 521. In an embodiment, each of the plurality of bridge portions 5211-1 and 5211-2 may include a conductive member so that a metal antenna may be mounted on the bridge portion 5211. In an embodiment, each of the plurality of bridge portions 5211-1 and 5211-2 may have a different length, so different frequency bands may be secured. In an embodiment, the second frame portion 522 may include a connecting portion 5221 connecting the plurality of bridge portions 5211. In an embodiment, the second frame portion 522 may include the connecting portion 5221 that interconnects the plurality of bridge portions 5211, which is separately formed along the perimeter direction of the first frame portion 521. In an embodiment, in the process in which the second frame portion 522 is connected to the first frame portion 521, the connecting portion 5221 of the second frame portion 522 may connect the plurality of bridge portions 5211 of the first frame portion 521.

In an embodiment, the first frame portion 521 may include a fingerprint sensing area 521b. In an embodiment, a fingerprint sensor (not shown) may be disposed in the fingerprint sensing area 521b. In an embodiment, the fingerprint sensing area 521b may be formed in the first frame portion 521. In an embodiment, the color of the first frame portion 521 in which the fingerprint sensing area 521b is formed may be different from the color of the second frame portion 522 in which the fingerprint sensing area 521b is not formed. For example, the first frame portion 521 may have a black color, and the second frame portion 522 may have any color other than black. In an embodiment, in the process in which the second frame portion 522 is connected to the first frame portion 521, the fingerprint sensing area 521b may have a different color from an adjacent area, which may minimize the impact on the angle of view of the fingerprint sensor.

Hereinafter, a method of manufacturing a housing of an electronic device according to an embodiment is described. In describing the method of manufacturing the housing of the electronic device, redundant descriptions overlapping with those previously mentioned are omitted. Additionally, unless otherwise specified, it may be understood that like terms as mentioned above refer to like elements. Meanwhile, in the present disclosure, the term "- operation" is not intended to limit the order of the process, and the term "- operation" may be understood as "- process" or "- step".

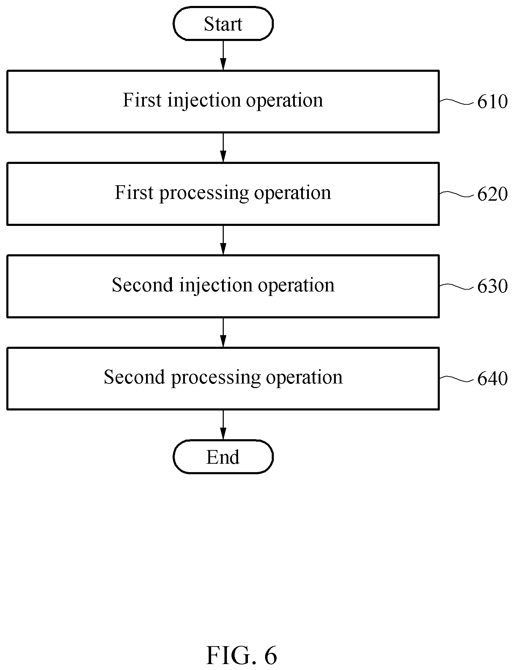

FIG. 6 is a flowchart illustrating a method of manufacturing a housing of an electronic device, according to an embodiment.

A method of manufacturing a housing (e.g., the housing 510 of FIG. 5A) of an electronic device (e.g., the electronic device 301 of FIG. 3A) according to an embodiment may include molding a front frame (e.g., the front frame 520 of FIG. 5A) including a first frame portion (e.g., the first frame portion 521 of FIG. 5A) and a second frame portion (e.g., the second frame portion 522 of FIG. 5A) through double injection.

In an embodiment, the method of manufacturing the housing of the electronic device may include a first injection operation 601 of inserting a first material for first molding while a first movable mold is coupled to a first fixed mold to inject a first frame portion in which an acoustic conduit (e.g., the acoustic conduit 560 of FIG. 5A) is formed, a first processing operation 602 of separating the first movable mold from the first fixed mold and processing the first frame portion, a second injection operation 603 of inserting a second material for second molding while the first frame portion is inserted into a second fixed mold to inject a second frame portion connected to the outer perimeter of the first frame portion to form a housing (e.g., the housing 310 of FIG. 3A) in which an acoustic hole (e.g., the acoustic hole 515 of FIG. 5A) is formed, and a second processing operation 604 of separating the housing from the second fixed mold and end milling the first frame portion to form an inlet of the acoustic conduit.

In the first injection operation 601, the first material (e.g., PC GF20%) for the first molding may be inserted while the first movable mold is coupled to the first fixed mold, so the first frame portion in which the acoustic conduit is formed may be integrally molded. The first movable mold may be used to secure a space for forming an acoustic conduit within the first fixed mold.

In the first processing operation 602, the first movable mold may be separated from the first fixed mold, and the first frame portion may be processed. In the first processing operation 602, a plurality of bridge portions (e.g., the plurality of bridge portions 5211 of FIG. 5E) may be formed in the first frame portion. The plurality of bridge portions may be formed by partially segmenting the first frame portion along the perimeter direction of the first frame portion.

In the second injection operation 603, while the first frame portion is inserted into the second fixed mold, the second material (e.g., PC GF10%) for the second molding may be inserted to integrally mold the second frame portion connected to the outer perimeter of the first frame portion. An acoustic hole may be formed as a gap between the first frame portion and the second frame portion is formed.

In the second processing operation 604, the first frame portion may be end milled to form the inlet of the acoustic conduit. Accordingly, the inlet of the acoustic conduit may communicate with an acoustic module, and the outlet of the acoustic conduit may communicate with the acoustic hole.

An electronic device 101, 201, or 301 may include a housing 310 including a front surface 310a, a rear surface 310b that is opposite to the front surface 310a, an inner space between the front surface 310a and the rear surface 310b, and a front frame 320 or 520 surrounding at least a portion of the inner space, a display 361 disposed on the front surface 310a of the housing 310, and an acoustic module 500 disposed in the inner space and including a speaker configured to generate a sound, wherein the front frame 320 or 520 may include a first frame portion 421 or 521 disposed in the inner space and configured to support the acoustic module 500 and a second frame portion 422 or 522 surrounding a perimeter of the first frame portion 421 or 521 and forming at least a portion of a side surface 311c of the housing 310, wherein an acoustic hole 313, 315, 355, or 515, which has a width direction and is open to an outside of the housing 310, may be formed between the first frame portion 421 or 521 and the second frame portion 422 or 522, wherein an acoustic conduit 460 or 560 configured to move the sound from an inlet 560a in communication with the acoustic module 500 toward an outlet 560b in communication with the acoustic hole 313, 315, 355, or 515 may be formed in the first frame portion 421 or 521, and wherein the acoustic conduit 460 or 560 may have a cross-sectional width gradually increasing from the inlet 560a toward the outlet 560b in a state in which the display 361 is viewed.

In an embodiment, in a state in which the display 361 is viewed, a virtual straight line L3 extending from a center of the inlet 560a of the acoustic conduit 460 or 560 to a center of the outlet 560b of the acoustic conduit 460 or 560 may be inclined toward a center of the acoustic hole 313, 315, 355, or 515.

In an embodiment, the acoustic conduit 460 or 560 may include a first side wall 561 that is perpendicular to the front surface 310a of the housing 310 and adjacent to the acoustic hole 313, 315, 355, or 515 and a second side wall 562 that is perpendicular to the front surface 310a of the housing 310 and opposite to the first side wall 561, each of the first side wall 561 and the second side wall 562 may extend from the inlet 560a toward the outlet 560b, and the first side wall 561 and the second side wall 562 may extend away from each other.

In an embodiment, in a state in which the display 361 is viewed, the first side wall 561 may form a straight line L1 inclined toward the center of the acoustic hole 313, 315, 355, or 515.

In an embodiment, in a state in which the display 361 is viewed, the second side wall 562 may form a straight line L2 that is substantially perpendicular to the width direction of the acoustic hole 313, 315, 355, or 515.

In an embodiment, in a state in which the display 361 is viewed, the first side wall 561 may form a straight line L1, and the straight line L1 formed by the first side wall 561 may be inclined with respect to the straight line L2 formed by the second side wall 562.

In an embodiment, in a state in which the display 361 is viewed, the first side wall 561-1 may form a curve.

In an embodiment, the acoustic conduit 460 or 560 may be formed such that a size of a cross-section of the acoustic conduit 460 or 560 gradually increases from the inlet 560a toward the outlet 560b.

In an embodiment, the acoustic conduit 460 or 560, based on a length in a height direction perpendicular to the front surface 310a, may have a length D2 in a height direction at the outlet 560b that is greater than or equal to a length D1 in a height direction at the inlet 560a.

In an embodiment, a camera mounting hole 521a for disposing a camera module 180 may be formed through the first frame portion 421 or 521 at a position adjacent to the acoustic conduit 460 or 560, and in a state in which the display 361 is viewed, the acoustic conduit 460 or 560 may be spaced apart by a set distance or more from the camera mounting hole 521a.

In an embodiment, based on a state in which the display 361 is viewed, the acoustic conduit 460 or 560 may include the first side wall 561 adjacent to the camera mounting hole 521a and in contact with a virtual circle 521a-2 that is concentric with the camera mounting hole 521a and the second side wall 562 that is opposite to the first side wall 561 and extends from the inlet 560a toward the outlet 560b in a direction perpendicular to the width direction of the acoustic hole 313, 315, 355, or 515.

In an embodiment, based on a state in which the display 361 is viewed, the acoustic conduit 460 or 560 may include the first side wall 561 adjacent to the camera mounting hole 521a and extending from the inlet 560a to the outlet 560b while forming a predetermined curvature with respect to a center 521a-1 of the camera mounting hole 521a and the second side wall 562 that is opposite to the first side wall 561 and extends from the inlet 560a toward the outlet 560b in a direction perpendicular to the width direction of the acoustic hole 313, 315, 355, or 515.

In an embodiment, the first frame portion 421 or 521 may be separated along a perimeter direction of the first frame portion 421 or 521 and include a plurality of bridge portions 5211, each including a conductive member, and the second frame portion 422 or 522 may include a connecting portion 5221 configured to connect the plurality of bridge portions 5211.

In an embodiment, the first frame portion 421 or 521 and the second frame portion 422 or 522 may be formed of different materials.

In an embodiment, the first frame portion 421 or 521 may include a fingerprint sensing area 521b in which a fingerprint sensor is disposed, and the first frame portion 421 or 521 and the second frame portion 422 or 522 may have different colors.

In an embodiment, a method of manufacturing a housing 310 of an electronic device 101, 201, or 301 may include a first injection operation 610 of inserting a first material for first molding while a first movable mold is coupled to a first fixed mold to inject a first frame portion 421 or 521 in which an acoustic conduit 460 or 560 is formed, a first processing operation 620 of separating the first movable mold from the first fixed mold and processing the first frame portion 421 or 521, a second injection operation 630 of inserting a second material for second molding while the first frame portion 421 or 521 is inserted into a second fixed mold to inject a second frame portion 422 or 522 connected to the outer perimeter of the first frame portion 421 or 521 to form the housing 310 in which an acoustic hole 313, 315, 355, or 515 is formed, and a second processing operation 640 of separating the housing 310 from the second fixed mold and end milling the first frame portion 421 or 521 to form an inlet 560a of the acoustic conduit 460 or 560.

In an embodiment, the first processing operation 620 may include an operation of forming a plurality of bridge portions 5211 by partially segmenting the first frame portion 421 or 521 along a perimeter direction, and the second frame portion 422 or 522 may include a connecting portion 5221 for connecting the plurality of segmented bridge portions 5211.

In an embodiment, an electronic device 101, 201, or 301 may include a housing 310 including a front surface 310a, a rear surface 310b that is opposite to the front surface 310a, an inner space between the front surface 310a and the rear surface 310b, and a front frame 320 or 520 surrounding at least a portion of the inner space, a display 361 disposed on the front surface 310a of the housing 310, a camera module 180 disposed to be exposed through the front surface 310a or the rear surface 310b of the housing 310, and an acoustic module 500 disposed in the inner space and including a speaker that generates a sound, wherein the front frame 320 or 520 may include a first frame portion 421 or 521 disposed in the inner space and supporting the acoustic module 500 and a second frame portion 422 or 522 that surrounds the perimeter of the first frame portion 421 or 521, forms at least a portion of the side surface 311c of the housing 310, and is formed of a different material from the first frame portion 421 or 521, an acoustic hole 313, 315, 355, or 515 that has a width direction and is open to the outside of the housing 310 is formed between the first frame portion 421 or 521 and the second frame portion 422 or 522, an acoustic conduit 460 or 560 extending from an inlet 560a in communication with the acoustic module 500 toward an outlet 560b in communication with the acoustic hole 313, 315, 355, or 515 and having a size of a cross-section that generally increases from the inlet 560a toward the outlet 560b and a camera mounting hole 521a formed through a position adjacent to the acoustic conduit 460 or 560 and for disposing the camera module 180 may be formed in the first frame portion 421 or 521, and in a state in which the display 361 is viewed, the width of the cross-section of the acoustic conduit 460 or 560 may gradually increase from the inlet 560a toward the outlet 560b.

In an embodiment, the acoustic conduit 460 or 560 may have a first side wall 561 that is perpendicular to the front surface 310a of the housing 310 and adjacent to the acoustic hole 313, 315, 355, or 515 and a second side wall 562 that is perpendicular to the front surface 310a of the housing 310 and opposite to the first side wall 561, wherein each of the first side wall 561 and the second side wall 562 may extend from the inlet 560a toward the outlet 560b, the first side wall 561 and the second side wall 562 may extend away from each other, in a state in which the display 361 is viewed, the first side wall 561 may form a straight line that is inclined toward the center of the acoustic hole 313, 315, 355, or 515, the second side wall 562 may form a straight line that is substantially perpendicular to the width direction of the acoustic hole 313, 315, 355, or 515, and the straight line formed by the first side wall 561 may be inclined with respect to the straight formed by the second side wall 562.

In an embodiment, the first frame portion 421 or 521 may be formed of a PC GF20% material, and the second frame portion 422 or 522 may be formed of a PC GF10% material.

## Claims

1. An electronic device (101; 201; 301) comprising:
a housing (310) comprising a front surface (310a), a rear surface (310b) that is opposite to the front surface (310a), an inner space between the front surface (310a) and the rear surface (310b), and a front frame (320; 520) surrounding at least a portion of the inner space;
a display (361) disposed on the front surface (310a) of the housing (310); and
an acoustic module (500) disposed in the inner space and comprising a speaker configured to generate a sound,
wherein the front frame (320; 520) comprises:
a first frame portion (421; 521) disposed in the inner space and configured to support the acoustic module (500); and
a second frame portion (422; 522) surrounding a perimeter of the first frame portion (421; 521) and forming at least a portion of a side surface (311c) of the housing (310),
wherein an acoustic hole (313; 315; 355; 515), which has a width direction and is open to an outside of the housing (310), is formed between the first frame portion (421; 521) and the second frame portion (422; 522),
wherein an acoustic conduit (460; 560) configured to move the sound from an inlet (560a) in communication with the acoustic module (500) toward an outlet (560b) in communication with the acoustic hole (313; 315; 355; 515) is formed in the first frame portion (421; 521), and
wherein the acoustic conduit (460; 560) has a cross-sectional width gradually increasing from the inlet (560a) toward the outlet (560b) in a state in which the display (361) is viewed.

2. The electronic device (101; 201; 301) of claim 1, wherein in a state in which the display (361) is viewed, a virtual straight line (L3) extending from a center of the inlet (560a) of the acoustic conduit (460; 560) to a center of the outlet (560b) of the acoustic conduit (460; 560) is inclined toward a center of the acoustic hole (313; 315; 355; 515).

3. The electronic device (101; 201; 301) of claim 1 or 2, wherein
the acoustic conduit (460; 560) comprises:
a first side wall (561; 561-1) that is perpendicular to the front surface (310a) of the housing (310) and adjacent to the acoustic hole (313; 315; 355; 515); and
a second side wall (562) that is perpendicular to the front surface (310a) of the housing (310) and opposite to the first side wall (561),
each of the first side wall (561) and the second side wall (562) extends from the inlet (560a) toward the outlet (560b), and
the first side wall (561) and the second side wall (562) extend away from each other.

4. The electronic device (101; 201; 301) of any one of claims 1 to 3, wherein in a state in which the display (361) is viewed, the first side wall (561) forms a straight line (L1) inclined toward the center of the acoustic hole (313; 315; 355; 515).

5. The electronic device (101; 201; 301) of any one of claims 1 to 4, wherein in a state in which the display (361) is viewed, the second side wall (562) forms a straight line (L2) that is substantially perpendicular to the width direction of the acoustic hole (313; 315; 355; 515).

6. The electronic device (101; 201; 301) of any one of claims 1 to 5, wherein
in a state in which the display (361) is viewed,
the first side wall (561) forms a straight line (L1), and
the straight line (L1) formed by the first side wall (561) is inclined with respect to a straight line (L2) formed by the second side wall (562).

7. The electronic device (101; 201; 301) of any one of claims 1 to 6, wherein in a state in which the display (361) is viewed, the first side wall (561-1) forms a curve.

8. The electronic device (101; 201; 301) of any one of claims 1 to 7, wherein the acoustic conduit (460; 560) is formed such that a size of a cross-section of the acoustic conduit (460; 560) gradually increases from the inlet (560a) toward the outlet (560b).

9. The electronic device (101; 201; 301) of any one of claims 1 to 8, wherein the acoustic conduit (460; 560), based on a length in a height direction perpendicular to the front surface (310a), has a length (D2) in a height direction at the outlet (560b) that is greater than or equal to a length (D1) in a height direction at the inlet (560a).

10. The electronic device (101; 201; 301) of any one of claims 1 to 9, wherein a camera mounting hole (521a) for disposing a camera module (180) is formed through the first frame portion (421; 521) at a position adjacent to the acoustic conduit (460; 560), and
in a state in which the display (361) is viewed, the acoustic conduit (460; 560) is spaced apart by a set distance or more from the camera mounting hole (521a).

11. The electronic device (101; 201; 301) of any one of claims 1 to 10, wherein, based on a state in which the display (361) is viewed, the acoustic conduit (460; 560) comprises:
the first side wall (561) adjacent to the camera mounting hole (521a) and in contact with a virtual circle (521a-2) that is concentric with the camera mounting hole (521a); and
the second side wall (562) that is opposite to the first side wall (561) and extends from the inlet (560a) toward the outlet (560b) in a direction perpendicular to the width direction of the acoustic hole (313; 315; 355; 515).

12. The electronic device (101; 201; 301) of any one of claims 1 to 11, wherein, based on a state in which the display (361) is viewed, the acoustic conduit (460; 560) comprises:
the first side wall (561) adjacent to the camera mounting hole (521a) and extending from the inlet (560a) to the outlet (560b) while forming a predetermined curvature with respect to a center (521a-1) of the camera mounting hole (521a); and
the second side wall (562) that is opposite to the first side wall (561) and extends from the inlet (560a) toward the outlet (560b) in a direction perpendicular to the width direction of the acoustic hole (313; 315; 355; 515).

13. The electronic device (101; 201; 301) of any one of claims 1 to 12, wherein
the first frame portion (421; 521) is separated along a perimeter direction of the first frame portion (421; 521) and comprises a plurality of bridge portions (5211), each comprising a conductive member, and
the second frame portion (422; 522) comprises a connecting portion (5221) configured to connect the plurality of bridge portions (5211).

14. The electronic device (101; 201; 301) of any one of claims 1 to 13, wherein the first frame portion (421; 521) and the second frame portion (422; 522) are formed of different materials.

15. The electronic device (101; 201; 301) of any one of claims 1 to 14, wherein
the first frame portion (421; 521) comprises a fingerprint sensing area (521b) in which a fingerprint sensor is disposed, and
the first frame portion (421; 521) and the second frame portion (422; 522) have different colors.
